## Europäisches Patentamt

## European Patent Office

## Office européen des brevets

(11) Publication number: **0 122 400**
**B1**

(12) **EUROPEAN PATENT SPECIFICATION**

(45) Date of publication of patent specification: **22.07.87**

(51) Int. Cl.⁴: **A 23 L 1/236**

(21) Application number: **84101700.7**

(22) Date of filing: **18.02.84**

(54) Sweetener composition and sweetening method.

(30) Priority: **21.02.83 JP 28300/83**

(43) Date of publication of application:
**24.10.84 Bulletin 84/43**

(45) Publication of the grant of the patent:
**22.07.87 Bulletin 87/30**

(84) Designated Contracting States:
**AT BE CH DE FR GB IT LI LU NL SE**

(56) References cited:
**EP-A-0 064 361**
**CH-A- 581 643**
**LU-A- 84 363**

(73) Proprietor: **Takeda Chemical Industries, Ltd.**
**27, Doshomachi 2-chome Higashi-ku**
**Osaka-shi Osaka, 541 (JP)**

(72) Inventor: **Nakajima, Nobuo**
**8-101, 9 Okamoto 4-chome**
**Higashinada-ku Kobe Hyogo 658 (JP)**

(74) Representative: **von Kreisler, Alek, Dipl.-Chem.**
**et al**
**Deichmannhaus am Hauptbahnhof**
**D-5000 Köln 1 (DE)**

**The file contains technical information
submitted after the application was filed and
not included in this specification**

Courier Press, Leamington Spa, England.

# 0 122 400

**Description**

This invention relates to a sweetener composition and a sweetening method.

Sugar is an excellent sweetening agent which imparts a good sweet taste but has the drawback that an excessive intake of it results in problems associated with an excess of calorie. Therefore, as substitutes for sugar, sodium cyclamate and saccharin sodium, among others, have heretofore been employed. However, these sweeteners have been questioned in view of safety. Recently, peptide type sweeteners have been developed but have proved disadvantageous in terms of stability in solution. Stebioside and glycyrrhizin as natural sweeteners have also been utilized but both of them have problems in the respect of quality of sweetness. Therefore, there has been a demand for development of a sweetener characterized by low caloric value, high safety and satisfactory quality of sweetness.

Recently, the potassium salt of 6-methyl-3,4-dihydro-1,2,3-oxathiazin-4-one-2,2-dioxide (hereinafter referred to sometimes as Acesulfame K), an oxathiazine derivative, was found to have a sweet taste. Compared with a 5% aqueous solution of sucrose, this substance has a sweetness about 100 times as much as that of sucrose. It has an additional advantage of high solubility and high stability in solution, for instance. However, since this substance has a bitter tone in sweetness and is not altogether satisfactory in this and other aspects, it cannot be expected to be of broad use unless its quality of sweetness is somehow improved.

EP—A—58 410 discloses a composition containing Acesulfame or an Acesulfame salt, a water-soluble $CO_2$ delivering agent and optionally a physiologically acceptable, acidic gelatin powder.

EP—A 64 361 relates to synergistic compositions containing a mixture of different sweetening agents, at least one of which is saccharin, stevioside, Acesulfame K or other sweetening agent with an associated bitter taste and another which is a sucrose derivative.

The present inventor became interested in the characteristics of Acesulfame K which is a low-caloric, stable sweetener and conducted an intensive study for improving its quality of sweetness. As a result, it was found that the combined use of Acesulfame K and one or more of certain amino acids, organic acid salts, inorganic acid salts, etc. resulted in the development of a sweet taste of desirable quality. The finding was followed by further investigations, which resulted in the completion of this invention.

Thus, this invention is directed to:

(1) A composition for the sweetening of foods or pharmaceutical products, which contains (a) 6-methyl-3,4-dihydro-1,2,3-oxathiazine-4-one-2,2-dioxide potassium and (b) one or more members selected from the group consisting of alanine, glycine, histidine, arginine glutamate, glutamic acid and its sodium salt, sodium 5'-inosinate, sodium 5'-guanylate, and disodium phosphate, whereby the ratio of alanine and/or glycine is 1000 to 4000 weight parts relative to 100 weight parts of (a); the ratio of histidine is 10 to 1000 weight parts relative to 100 weight parts of (a); the ratio of arginine glutamate is 10 to 1000 weight parts relative to 100 weight parts of (a); the ratio of sodium 5'-inosinate and/or sodium 5'-guanylate is 2 to 10 weight parts relative to 100 weight parts of (a), and the ratio of disodium phosphate and/or glutamic acid and its sodium salt is 10 to 1000 weight parts relative to 100 weight parts of (a);

(2) to a method for sweetening foods or pharmaceutical products comprising the inventive composition.

Acesulfame K, which is used in accordance with this invention, is a known compound and a method for production thereof and other particulars have been described in Japanese Patent unexamined publication No. 34182/1976 and United States Patent 3,969,347.

On the other hand, alanine, glycine, histidine, arginine glutamate, glutamic acid and its sodium salt, sodium 5'-inosinate, sodium 5'-guanylate,

and disodium phosphate may each be of edible grade, and the materials specified under the Food Sanitation Law (Japan), for instance, can be conveniently used to achieve stable effects. Sodium 5'-inosinate and sodium 5'-guanylate can be also used as their mixture such as the sodium 5'-ribonucleotide specified under the Food Sanitation Law (Japan).

The ratio of Acesulfame K to each of the above-mentioned compounds in the sweetener composition of this invention is virtually optional within the range where the heterogenous taste or flavor of any of such specific ingredient compounds is not discernible. Usually, relative to 100 weight parts of Acesulfame K, about 2 to 4000 weight parts of one or more of said compounds are used selectively in consideration of properties of such compounds. For example, when the compound itself has a high taste threshold, as it is the case with alanine and glycine, for instance, its proportion in the composition may be high and is preferably in the range of about 1000 to 4000 weight parts. On the other hand, as to the compound having a low taste threshold, like sodium 5'-ribonucleotide, its proportion ought to be low, the preferred range being about 2 to 10 weight parts. In the case of compounds having intermediate taste thresholds, like histidine, arginineglutamate, glutamic acid and its sodium salt, and disodium phosphate, the preferred range is about 10 to 1000 weight parts relative 100 parts of Acesulfame K.

The sweetener composition according to this invention may further contain, as necessary, other sweetening agents such as sugars and sugar alcohols, e.g. sucrose, glucose, fructose, sorbit, etc., and low-caloric sweeteners such as aspartame and stebioside. It is also permissible to add carriers such as starch, dextrin, lactose, etc.

As regards the form of and the production of the sweetener composition of this invention, there are

2

# 0 122 400

virtually no limitations only if Acesulfame K and the compounds specified hereinbefore may be incorporated in the above-mentioned proportions. For example, Acesulfame K and said compounds may be admixed, both in powdery form, to give a powder. Or Acesulfame K and said compounds may first be blended with dextrin powder and the mixture be extruded with water as a binder to give a granular preparation. A liquid sweetener may be prepared by dissolving Acesulfame K and said compounds in water.

The sweetener composition according to this invention can be used broadly for the purpose of sweetening foods and pharmaceutical products which are either ingested by man or other animals or administered to them. As examples of said foods, there may be mentioned various beverages such as fruit drinks, carbonated drinks, lactic acid drinks, etc.; instant drinks such as powdered juice, instant coffee, "shiruko" (sweet red bean-paste soup) powder; ice confections such as ice cream, sherbet, etc.; bottled or canned fruits and vegetables, jams, marmalades, bread, confectionary products, bean cakes, chocolate, candies, chewing gum, jellies, puddings, etc.; soy-cooked beans, soy-cooked delicacies, pickles, compound sweeteners, flavorants, condiments, and other foods which need sweet tastes. Examples of said pharmaceutical products include powders, tablets, syrups, etc., solutions and suspensions, dentifrices, gargles, etc. and the present invention can be applied to veterinary drugs for administration to animals that like sweet tastes.

This sweetener composition can be used in an amount necessary to achieve the degree of sweetness which depends on the kind of food or pharmaceutical product to be sweetened. The amount thus varies with the particular composition of the sweetener composition and the kind of food or drug. In many cases, relative to the substrate to be sweetened, the sweetener composition of this invention can be used at the level of addition of about 0.01 to 10 weight percent as Acesulfame K to achieve a satisfactory result.

As regards the manner in which the composition is added to the substrate food or drug, it can be added by the conventional method during the production of foods or drugs, and for the purpose, such procedures as mixing, kneading, dissolution, dipping, saturation, dusting, spraying, injection, etc. may be selectively employed.

The sweetening method according to this invention is characterized by the combined use of Acesulfame K and said particular compounds, and in applying this invention to foods and drugs, the same effect can be accomplished by adding Acesulfame K and said compounds severally instead of adding the composition as such.

In accordance with this invention, the bitter taste on use of Acesulfame K alone is considerably mitigated to impart a sweetness of improved quality. Therefore, a large variety of foods and pharmaceutical products can be sweetened in accordance with this invention. The invention also enables us to provide foods and drugs containing a low-caloric sweetener having a desirable quality of sweetness.

The following test and working examples are further illustrative of this invention.

Test Example 1

To 0.044% solutions of Acesulfame K (which have a sweetness equivalent to a 5% solution of cane sugar) were added various amino acids, organic acid salts, inorganic salts, etc. and the qualities of sweetness of the mixtures were tested by a sensory evaluation. The panel consisted of 5 trained members. The results are given in Table 1.

3

**0 122 400**

TABLE 1

| Test compound | Test [Note 1] concentration (%) | Effect of improving the quality of sweetness of Acesulfame K |
|---|---|---|
| DL-Alanine | 0.4~1.6 | ++ [Note 2] |
| Glycine | 0.4~1.6 | ++ |
| Sodium aspartate | 0.04~0.64 | − |
| Sodium glutamate | 0.02~0.32 | + |
| Sodium glutamate and sodium 5'-ribonucleotide (9:1) | 0.002~0.008 | + |
| L-histidine hydrochloride | 0.04~0.08 | + |
| L-Arginine | 0.02~0.08 | − |
| L-Arginine L-glutamate | 0.02~0.04 | + |
| Sodium citrate | 0.01~0.16 | − |
| Sodium DL-malate | 0.02~0.32 | − |
| Sodium tartarate | 0.04~0.08 | + |
| Sodium succinate | 0.0025~0.04 | − |
| Sodium chloride | 0.01~0.16 | − |
| Potassium chloride | 0.01~0.16 | − |
| Disodium phosphate | 0.05~0.20 | + |
| Sodium 5'-ribonucleotide | 0.001~0.004 | + |

Note 1) The test was performed in a doubling dilution series. The figures indicate the concentrations, at which the effect was observed or, in ineffective cases, the concentration ranges tested.

Note 2) −: Not effective
+: Effective
++: Markedly effective

Test Example 2

A 0.044% solution of Acesulfame K (control) and mixtures of 0.044% solutions of Acesulfame K with various additive compounds (test solutions) were compared for the relative quality of sweetness by 18 trained panels in a paired comparison method. The results are shown in Table 2.

4

TABLE 2

| Control solution | Test solution (amount added to 0.044% Acesulfame K) | Number of panelists who favored. control: test | Evaluation |
|---|---|---|---|
| Acesulfame K 0.044% | DL-alanine 0.4% | 1:17*** | Less bitter |
| Acesulfame K 0.044% | Glycine 0.4% | 2:16** | Less bitter |
| Acesulfame K 0.044% | L-histidine · HCl 0.04% | 4:14* | Less bitter but acid |
| Acesulfame K 0.044% | Sodium glutamate (9 parts)/5'-ribo-nucleotide · Na (1 part) 0.004% | 2:16** | Less disagreeable taste |

   * Significant difference at 5% level
  ** Significant difference at 1% level
*** Significant difference at 0.1% level

Example 1
In 100 ml of boiling water was dissolved 1.4 g of the instant coffee "Nescafe®", and Acesulfame K and DL-alanine were added to the solution at the levels of 0.044% and 0.4%, respectively. The resultant coffee had a less caloric value and a delicious sweet taste.

Example 2
Sorbit, glycine and Acesulfame K in the proportions of 45%, 50% and 5%, respectively, were sieved to uniform grain size and admixed to give a low-caloric sweetener composition.
This low-caloric composition had a sweetness about 10 times as much as cane sugar, was readily soluble in water, and had a delicious quality of sweetness, being suitable for use not only as a table sweetener but also as a sweetening agent for cooking or processing purposes.

Example 3
Sucrose, Acesulfame K and sodium glutamate, all in powdery form, were admixed in the proportions of 98%, 1% and 1%, respectively, and using water as a binder, the mixture was extrusion-granulated to give a granular sweetener composition.
This composition had a sweetness about 3 times as much as sucrose. Besides being a low-caloric product having a satisfactory quality of sweetness, this product was suitable not only as a table sweetener but also as a sweetening agent for cooking or preparation purposes.

Example 4
A composition of 340 g of concentrated mandarin orange (variety: Unshiu) juice, 10 g of citric acid, 10 g of tartaric acid, 5 g of vitamin C, 10 g of orange essence, 400 g of sucrose, 3 g of Acesulfame K and 4 g of L-histidine hydrochloride was evenly dissolved in water to make 10 liters and the solution was pasturized at about 95°C for about 15 seconds. The pasturized solution was filled into 200 ml bottles in the routine manner to give an orange juice. This product had a delicious sweetness and its caloric value was less than one-half of that of conventional orange juice.

Example 5
Japan Agricultural Standard No. 5 cans were respectively filled with 235 g of mandarin orange (variety: Unshiu) pretreated by the routine peeling alkali/acid treatments, washing and other procedures and, thereafter, 40 g of 40% sucrose solution and 40 g of a mixed solution of 0.25% of Acesulfame K, 0.25% of sodium tartarate and 0.5% of disodium phosphate were filled over the orange. The cans were sealed, sterilized and cooled to give canned orange products.
The canned orange products had a refreshing sweet taste free of sticky heavy mouth-feel.

Example 6
A mixture of 850 ml of cow's milk, 14 g of gelatin, 180 g of glucose and 4 g of Acesulfame K was dissolved by warming, followed by addition of 400 ml of mandarin orange juice 3 g of citric acid, 4 g of tartaric acid and 8 g of disodium phosphate. The composition was routinely processed to give a sherbet. This product had a refreshing, braced-up sweetness and flavor.

## Example 7

Mottled kidney beans, 200 g, were washed with water and immersed in 3 volumes of water. The soaked beans were cooked under a moderate fire for 3 hours, at the end of which time 90 g of sucrose, 0.9 g of Acesulfame K and 0.5 g of sodium glutamate were added. The beans were further boiled under a moderate fire for 3 hours to give cooked beans.

This product had a full-bodied sweetness and flavor.

## Example 8

A mixture of 20 g of sodium chloride, 1 g of sodium gluatamate, 0.5 g of disodium succinate, 4 g of lactic acid (50%), 1 g of citric acid, 1 g of tartaric acid, 15 g of glacial acetic acid, 14 g of vegetable protein hydrolysate, 125 g of sucrose, 1.25 g of Acesulfame K and 2.5 g of disodium phosphate was dissolved in water to give 700 ml of a liquor for pickles. Then, 1 kg of scallions pretreated and desalted in the routine manner were immersed in this liquor. The scallions were uniformly pickled in a short period of time and the product had a full-bodied sweetness and delicious taste.

## Example 9

A mixture of 300,000 I.U. of vitamin A (palmitate), 30,000 I.U. of vitamin D, 1.5 g of Tween 80 (surface active agent), 0.1 g of orange oil, 10 g of sucrose, 0.1 g of Acesulfame K and 1 g of glycine was diluted with water in the conventional manner to give 100 ml of a vitamin A/D syrup. This was a syrup having a refreshing sweet taste, being not sticky and readily ingestable.

## Example 10

Sixty gram of Acesulfame K and 3 g of the mixture composed of sodium 5'-inosinate (1.5 g) and sodium 5'-guanylate (1.5 g), all in powdery form, were admixed to give a sweetener composition.

Apple jam was produced by a conventional manner using 1.5 kg of apple pulp, 0.6 kg of sorbitol solution (75%), 0.01 kg of sodium carboxymethylcellulose, 6.3 g of the sweetener composition obtained above and 3 l of water. The resultant jam had a less caloric value and a delicious sweet taste.

## Example 11

Four gram of L-histidine, 4 g of L-histidine hydrochloride and 4.4 g of Acesulfame K, all in powdery form, were admixed to give a sweetener composition.

When the resultant composition was used in an amount of about 0.12% as a sweetener for black tea, it had a refreshing sweet taste.

## Example 12

Ten gram of Acesulfame K and 7 g of L-arginine L-glutamate, both in powdery form, were admixed to give a sweetener composition.

Ice cream was produced by a conventional manner using 200 g of fresh cream, 95 g of defatted milk, 50 g of sorbital (powder), 50 g of millet jelly, 2 g of sorbitan fatty acid ester, 3 g of sodium arginate, 1.7 g of the sweetener composition obtained above, a small amount of vanila and 500 ml of water. The resultant ice cream had a less caloric value and a delicious sweet taste.

**Claims**

1. A composition for the sweetening of foods or pharmaceutical products, which contains (a) 6-methyl-3,4-dihydro-1,2,3-oxathiazine-4-one-2,2-dioxide potassium and (b) one or more members selected from the group consisting of alanine, glycine, histidine, arginine glutamate, glutamic acid and its sodium salt, sodium 5'-inosinate, sodium 5'-guanylate, and disodium phosphate, whereby the ratio of alanine and/or glycine is 1000 to 4000 weight parts relative to 100 weight parts of (a); the ratio of histidine is 10 to 1000 weight parts relative to 100 weight parts of (a); the ratio of arginine glutamate is 10 to 1000 weight parts relative to 100 weight parts of (a); the ratio of sodium 5'-inosinate and/or sodium 5'-guanylate is 2 to 10 weight parts relative to 100 weight parts of (a), and the ratio of disodium phosphate and/or glutamic acid and its sodium salt is 10 to 1000 weight parts relative to 100 weight parts of (a).

2. The composition according to claim 1, wherein the member is histidine and/or arginine glutamate.

3. The composition according to claim 1, wherein the ratio of sodium 5'-inosinate and sodium 5'-guanylate is about 50 to about 50 weight parts.

4. A method for sweetening foods or pharmaceutical products which comprises incorporating thereto (a) 6-methyl-3,4-dihydro-1,2,3-oxathiazine-4-one-2,2-dioxide potassium and (b) one or more members selected from the group consisting of alanine, glycine, histidine, arginine glutamate, glutamic acid and its sodium salt, sodium 5'-inosinate, sodium 5'-guanylate, and disodium phosphate, whereby the ratio of alanine and/or glycine is 1000 to 4000 weight parts relative to 100 weight parts of (a); the ratio of histidine is 10 to 1000 weight parts relative to 100 weight parts of (a); the ratio of arginine glutamate is 10 to 1000 weight parts relative to 100 weight parts of (a); the ratio of sodium 5'-inosinate and/or sodium 5'-guanylate is 2 to 10 weight parts relative to 100 weight parts of (a), and the ratio of disodium phosphate and/or glutamic acid and its sodium salt is 10 to 1000 weight parts relative to 100 weight parts of (a).

5. The method according to claim 4, wherein the member is histidine and/or arginine glutamate.

6. The method according to claim 4, wherein the ratio of sodium 5'-inosinate and sodium 5'-guanylate is about 50 to about 50 weight parts.

**Patentansprüche**

1. Eine Zusammensetzung zum Süßen von Nahrungsmitteln oder pharmazeutischen Produkten, die (a) 6-Methyl-3,4-dihydro-1,2,3-oxathiazin-4-on-2,2-dioxidkalium und (b) ein oder mehrere Mitglieder der Gruppe umfassend Alanin, Glycin, Histidin, Argininglutamat, Glutaminsäure und ihr Natriumsalz, Natrium-5'-inosinat, Natrium-5'-guanylat und Dinatriumphosphat enthält, wobei das Verhältnis von Alanin und/oder Glycin 1000—4000 Gew.-Teile, bezogen auf 100 Gew.-Teile von (a), beträgt; das Verhältnis von Histidin 10—1000 Gew.-Teile, bezogen auf 100 Gew.-Teile von (a) beträgt; das Verhältnis von Argininglutamat 10—1000 Gew.-Teile, bezogen auf 100 Gew.-Teile von (a), beträgt; das Verhältnis von Natrium-5'-inosinat und/oder Natrium-5'-guanylat 2—10 Gew.-Teile bezogen auf 100 Gew.-Teile von (a) beträgt und das Verhältnis von Dinatriumphosphat und/oder Glutaminsäure und ihres Natriumsalzes 10—1000 Gew.-Teile, bezogen auf 100 Gew.-Teile von (a), beträgt.

2. Die Zusammensetzung nach Anspruch 1, worin das Mitglied Histidin und/oder Argininglutamat ist.

3. Die Zusammensetzung nach Anspruch 1, worin das Verhältnis von Natrium-5'-inosinat und Natrium-5'-guanylat etwa 50 zu etwa 50 Gew.-Teilen beträgt.

4. Ein Verfahren zum Süßen von Nahrungsmitteln oder pharmazeutischen Produkten, das das Einbringen in dieselben von (a) 6-Methyl-3,4-dihydro-1,2,3-oxathiazin-4-on-2,2-dioxidkalium und (b) einem oder mehreren Mitgliedern der Gruppe enthaltend Alanin, Glycin, Histidin, Argininglutamat, Glutaminsäure und ihres Natriumsalzes, Natrium-5'-inosinat, Natrium-5'-guanylat und Dinatriumphosphat umfaßt, wobei das Verhältnis von Alanin und/oder Glycin 1000—4000 Gew.-Teile, bezogen auf 100 Gew.-Teile von (a) beträgt; das Verhältnis von Histidin 10—1000 Gew.-Teile, bezogen auf 100 Gew.-Teile von (a) beträgt; das Verhältnis von Argininglutamat 10—1000 Gew.-Teile, bezogen auf 100 Gew.-Teile von (a) beträgt; das Verhältnis von Natrium-5'-inosinat und/oder Natrium-5'-guanylat 2—10 Gew.-Teile, bezogen auf 100 Gew.-Teile von (a), beträgt und das Verhältnis von Dinatriumphosphat und/oder Glutaminsäure und ihres Natriumsalzes 10—1000 Gew.-Teile, bezogen auf 100 Gew.-Teile von (a), beträgt.

5. Das Verfahren nach Anspruch 4, worin das Mitglied Histidin und/oder Argininglutamat ist.

6. Das Verfahren nach Anspruch 4, worin das Verhältnis von Natrium-5'-inosinat und Natrium-5'-guanylat etwa 50 zu etwa 50 Gew.-Teilen beträgt.

**Revendications**

1. Une composition pour édulcorer des produits alimentaires ou des produits pharmaceutiques, qui contient (a) du 6-méthyl-3,4-dihydro-1,2,3-oxathiazine-4-one-2,2-dioxyde de potassium et (b) un ou plusieurs composé(s) choisi(s) parmi le groupe constitué par l'alanine, la glycine, l'histidine, le glutamate d'arginine, l'acide glutamique et son sel de sodium, le 5'-inosinate de sodium, le 5'-guanylate de sodium, et le phosphate disodique, dans laquelle le ratio de l'alanine et/ou de la glycine est de 1000 à 4000 parts en poids par rapport à 100 parts en poids de (a); le ratio de l'histidine est de 10 à 1000 parts en poids par rapport à 100 parts en poids de (a); le ratio du glutamate d'arginine est de 10 à 1000 parts en poids par rapport à 100 parts en poids de (a); le ratio du 5'-inosinate de sodium et/ou du 5'-guanylate de sodium est de 2 à 10 parts en poids par rapport à 100 parts en poids de (a) et le ratio du phosphate disodique et/ou de l'acide glutamique et de son sel de sodium est de 10 à 1000 parts en poids par rapport à 100 parts en poids (a).

2. Une composition selon la revendication 1, dans laquelle le composé est l'histidine et/ou le glutamate d'arginine.

3. Une composition selon la revendication 1, dans laquelle le ratio du 5'-inosinate de sodium au 5'-guanylate de sodium est d'environ 50 à environ 50 parts en poids.

4. Un procédé pour édulcorer les produits alimentaires et les produits pharmaceutiques, qui comprend l'incorporation à ces produits (a) du 6-méthyl-3,4-dihydro-1,2,3-oxathiazine-4-one-2,2-dioxyde de potassium et (b) d'un ou plusieurs composé(s) choisi(s) dans le groupe constitué par l'alanine, la glycine, l'histidine, le glutamate d'arginine, l'acide glutamique et son sel de sodium, le 5'-inosinate de sodium, le 5'-guanylate de sodium, et le phosphate disodique, dans lequel le ratio de l'alanine et/ou de la glycine est de 1000 à 4000 parts en poids par rapport à 100 parts en poids de (a); le ratio de l'histidine est de 10 à 1000 parts en poids par rapport à 100 parts en poids de (a); le ratio du glutamate d'arginine est de 10 à 1000 parts en poids par rapport à 100 parts en poids de (a); le ratio du 5'-inosinate de sodium et/ou du 5'-guanylate de sodium est de 2 à 10 parts en poids par rapport à 100 parts en poids de (a), et le ratio du phosphate disodique et/ou de l'acide glutamique et de son sel de sodium est de 10 à 1000 parts en poids par rapport à 100 parts en poids de (a).

5. Un procédé selon la revendication 4, dans lequel le composé est l'histidine et/ou le glutamate d'arginine.

6. Un procédé selon la revendication 4, dans lequel le ratio du 5'-inosinate de sodium au 5'-guanylate de sodium est d'environ 50 à environ 50 parts en poids.

7